# EUROPÄISCHE PATENTANMELDUNG

(11) **EP 2 269 493 A1**
(43) Veröffentlichungstag der Anmeldung: **05.01.2011**
(21) Anmeldenummer: 09008520.0
(22) Anmeldetag: 30.06.2009
(51) Int. Cl.: A47J 43/07

(54) **Nabe für ein Rührwerkzeug**

(71) Anmelder: Braun GmbH, 61476 Kronberg (DE)
(72) Erfinder: Ring, Martin, Dr., 61479 Glashütten (DE); Preiss, Thomas, 64297 Darmstadt (DE)

(57) **Zusammenfassung**

Die vorliegende Erfindung betrifft ein Rührwerkzeug, vorzugsweise für eine Küchenmaschine. Insbesondere geht es um ein Rührwerkzeug, mit einem um eine Antriebsachse in einer Rotationsrichtung rotierbaren Nabenteil, von dem sich radial zur Antriebsachse mindestens ein Rührarme erstreckt, wobei das Nabenteil mindestens einen achsnahen Bereich und mindestens einen achsfernen Bereich aufweist und der achsferne Bereich aus der Rotationsrichtung gesehen eine konvexe Form hat. Ferner betrifft die Erfindung ein motorgetriebenes Küchengerät und ein Verfahren zum Schlagen von Teig mit einem solchen Rührwerkzeug;

## Beschreibung

### Gebiet der Erfindung

Die vorliegende Erfindung betrifft ein Rührwerkzeug und insbesondere seine Nabe, vorzugsweise für eine Küchenmaschine. Beispielsweise kann das Rührwerkzeug in einem Standgerät (welches typischerweise mit einer Rührschüssel verbunden ist) eingesetzt werden. Es kann ebenfalls in einem Handmixer eingesetzt werden. Insbesondere ist es auch für den Einsatz mit der Antriebseinheit eines Pürierstabes geeignet.

### Hintergrund der Erfindung

Für Küchenmaschinen, aber auch für andere Mischungs-, Rühr- und Zerkleinerungsaufgaben ist eine Vielzahl von Rührwerkzeugen bekannt.

US 2006/0062079 A1 (Anmelderin: Ekato Solidmix GmbH) offenbart ein Rührwerkzeug mit zwei verstellbaren Armen zum Einsatz in einem Rührtrog. Dieses Rührwerkzeug kann durch ein Zerkleinerungswerkzeug ergänzt werden. Die mechanische Konstruktion ist anspruchsvoll. Die zusätzliche Benutzung eines Zerkleinerungswerkzeuges erscheint eher aufwendig.

EP 1982624 A1 (Electrodomesticos Taurus S.L.) offenbart ein Küchenwerkzeug, insbesondere für einen Pürierstab. Dieses Werkzeug soll drei oder mehr Klingen aufweisen und aus Metall gefertigt sein. Die Klingen sind in verschiedenen Winkelrichtungen ausgerichtet, um das Durchmischen von Nahrungsmitteln in einem Rührtopf zu fördern. Abgesehen von ihrer Ausrichtung sind die Klingen im Wesentlichen von einfacher symmetrischer Form. Daher erscheint es unwahrscheinlich, dass ein Rührergebnis erzielt werden kann, welches etwa zum Rühren von Kuchenteig ausreichend wäre.

US 2,193,686 (Craddock) offenbart ein Rührwerkzeug mit im Wesentlichen propellerförmigen Rührblättern, welche zusätzlich bestimmte Krallen oder Stege aufweisen. Dieses Rührwerkzeug mag seine Aufgabe zwar effektiv erfüllen, ist aber in der Herstellung anspruchsvoll und kann wohl auch nur aus Metall gefertigt werden, um bei seiner komplizierten Form hinreichende Stabilität aufzuweisen.

EP 193128 A2 (SEB S.A.) offenbart ein Werkzeug, welches insbesondere für die Zubereitung von Marmeladen nützlich sein soll. Das Rührwerkzeug zeigt relativ große Rührschaufeln. Eine Rührschaufel ist in Rotationsrichtung und eine entgegen der Rotationsrichtung ausgerichtet. Die Rührschaufeln sind genau auf eine zu verwendende Rührschüssel abgestimmt. Mit einer anderen Rührschüssel ist das Rührwerkzeug offenkundig schlecht oder gar nicht zu verwenden. Wegen der Größe der Rührschaufeln ist auch ein erhebliches Drehmoment erforderlich, um sowohl ein hinreichendes Durchmischen als auch Zerkleinern von Früchten und dergleichen zu erreichen.

Die vorliegende Erfindung möchte die Schwächen im Stand der Technik vermeiden. Insbesondere soll ein gutes Durchmischen auch fester Rührteige mit einem einfach und preisgünstig herzustellenden Werkzeug ermöglicht werden. Dieses Werkzeug soll auch mit Küchenmaschinen einsetzbar sein, welche kein hohes Drehmoment zur Verfügung stellen können.

Diese Aufgabe wird durch ein Rührwerkzeug nach Anspruch 1 gelöst.

### Hauptmerkmale der Erfindung

Die vorliegende Erfindung betrifft ein Rührwerkzeug, vorzugsweise für eine Küchenmaschine. Insbesondere geht es um ein Rührwerkzeug, mit einem um eine Antriebsachse in einer Rotationsrichtung rotierbaren Nabenteil, von dem sich radial zur Antriebsachse mindestens ein Rührarme erstreckt, wobei das Nabenteil mindestens einen achsnahen Bereich und mindestens einen achsfernen Bereich aufweist und der achsferne Bereich aus der Rotationsrichtung gesehen eine konvexe Form hat. Ferner betrifft die Erfindung ein motorgetriebenes Küchengerät und ein Verfahren zum Schlagen von Teig mit einem solchen Rührwerkzeug.

### Detaillierte Beschreibung der Erfindung

Erfindungsgemäß geht es also um ein Rührwerkzeug, insbesondere zum Teigrühren mit einem um eine Antriebsachse in einer Rotationsrichtung rotierbaren Nabenteil. Von diesem Nabenteil soll sich im Wesentlichen radial zur Antriebsachse mindestens ein Rührarm erstrecken. Viele geeignete Rührarme sind bekannt, und können mit dem Nabenteil kombiniert werden. Das Nabenteil hat jedoch Vorteile bei der Kombination mit beliebigen Rührarmen. Dieses Nabenteil soll erfindungsgemäß mindestens einen achsnahen Bereich und einen achsfernen Bereich aufweisen. Der achsferne Bereich hat erfindungsgemäß aus der Rotationsrichtung gesehen eine konvexe Form. D.h., der achsferne Bereich wölbt sich dem Rührgut, welches in Rotationsrichtung auf die Nabe trifft, entgegen. Der achsnahe Bereich umfaßt im Wesentlichen die Rotationsachse. Darüber hinaus muß er keine Ausdehnung haben. Auch ist seine Form wenig relevant für den erfinderischen Nutzen. Der achsferne Bereich kann sich folglich unmittelbar an den Bereich der Rotationsachse anschließen. Er kann jedoch auch erst in einem Abstand zur Rotationsachse beginnen. Er kann ferner bis zur radial äußeren Begrenzung der Nabe reichen oder vorher enden.

Es hat sich als zweckmäßig erwiesen, wenn das Rührwerkzeug eine Vielzahl von solchen achsfernen Bereichen hat, die aus der Rotationsrichtung gesehen eine konvexe Form haben. Beispielsweise kommt eine gerade oder eine ungerade Zahl in Betracht. Denkbar sind insbesondere zwei, drei, vier oder mehr achsferne Bereiche. Diese können mit gleichem Winkelabstand zueinander angeordnet werden.

Ein besonders zweckmäßiges Rührwerkzeug weist eine Nabe mit zwei achsfernen Bereichen auf. Dieses Rührwerkzeug kann einen Querschnitt haben, der in mindestens einer Radialebene S-förmig ist. Der Querschnitt kann auch insgesamt, also in allen Radialebenen, S-förmig sein. Besonders vorteilhaft ist es, wenn sich in mindestens einem achsfernen Bereich an das Nabenteil ein Mischflügel anschließt. Dieser Mischflügel muß nicht die ganze axiale Länge der Nabe einnehmen, es genügt, wenn er in einem axialen Abschnitt vorgesehen ist. Beispielsweise kann der Mischflügel am unteren Ende der Achse vorgesehen sein. Der Mischflügel ist vorteilhafterweise axial orientiert, d.h. seine Hauptmischfläche ist entlang der Achse ausgerichtet, im Gebrauch in der Regel vertikal orientiert. Besonders vorteilhaft ist es auch, zwei radial gegenüber liegende Mischflügel vorzusehen. Diese Mischflügel wirken, in welcher Anordnung auch immer, mit dem achsfernen Bereich der Nabe zusammen und führen zu einem guten Rührergebnis. Insbesondere kann die Nabe so gestaltet sein, daß sie fließend in den Mischflügel übergeht. D.h., zwischen Mischflügel und Nabe gibt es keine Kanten oder Übergänge. Insbesondere kann die Tangente, mit der die Oberflächen des Mischflügels an benachbarte Bereiche der Nabe angrenzen, parallel zu den Tangenten in diesen benachbarten Bereichen der Nabe sein.

Zusätzlich zu den Mischflügeln können auch Rührarme vorgesehen sein. Solche Rührarme können in radialer Richtung länger sein als die Mischflügel. Insbesondere kommen zwei radial gegenüberliegende Rührarme in Betracht. Rührarme, so wie der Begriff hierin verwendet wird, unterscheiden sich von den Mischflügeln dadurch, daß Mischflügel eine größere axiale Ausdehnung haben, radial aber kürzer sind. Die Rührarme können Schlagflächen aufweisen, die jeweils einen Bogen beschreiben. Dieser Bogen kann in gleicher Richtung gekrümmt sein wie der konvexe achsferne Bereich der Nabe.

Es hat sich herausgestellt, daß konventionelle, meist im Wesentlichen zylinderförmige Naben nur einen geringen Beitrag zur Durchmischung eines Rührgutes leisten. Gerade wenn nur ein begrenztes Drehmoment zur Verfügung steht, ist es aber technisch von großem Vorteil, einen effektiven Beitrag der Nabe zum Rührergebnis zu erreichen. Nachteilig ist auch, und wiederum besonders nachteilig, wenn nur wenig Drehmoment zur Verfügung steht, wenn die Nabe größere Mengen Rührguts mit sich zieht. Das kann beispielsweise sein, wenn sich in Nabennähe große Teigklumpen bilden. Der in Drehrichtung konvexe achsferne Bereich sorgt dagegen dafür, daß Rührgut seitlich nach außen geschoben wird, also in radialer Richtung weg von der Rotationsachse. Folglich bilden sich keine zentralen Teig- oder Rührgutklumpen. Dieses radiale Wegbewegen von Rührgut führt auch zusätzlich zu einem verstärkten Durchmischungseffekt. Dieser findet teilweise durch den achsfernen Bereich der Nabe selbst statt, teilweise aber auch durch die fortgesetzte Zuführung von Rührgut zu den Rührarmen und gegebenenfalls zu den Mischflügeln.

Erfindungsgemäß wird auch ein beliebiges motorgetriebenes Küchengerät mit einem Rührwerkzeug, wie hierin beschrieben, zur Verfügung gestellt. Erfindungsgemäß wird ferner ein Verfahren zum Schlagen (und/oder Rühren) von Teig mit einem Rührwerkzeug der hierin beschriebenen Art zur Verfügung gestellt.

Das erfindungsgemäße Rührwerkzeug kann neben den beschriebenen Rührarmen noch Rührarme oder sogenannte Mischflügel anderen Typs enthalten. In Frage kommen beispielsweise Rührarme oder sogenannte Mischflügel kurzer Länge aber großer Fläche, die das Mischen von Rührgut in der Nähe des Nabenteils fördern.

Das Rührwerkzeug kann insgesamt aus einem Material hergestellt werden. Vorteilhafterweise kann es im Spritzgussverfahren hergestellt werden. Besonders Kunststoff, insbesondere Polyoxymethylen (POM). Andere technische Kunststoffe mit guter Steifigkeit und guten Reibwerten, welche somit auch eine gute untere Lagerstelle ausbilden können, sind auch einsetzbar.

Das Verfahren zum Schlagen von Teig wird vorteilhafterweise mit 800 bis 1000 Umdrehungen pro Minute ausgeführt. Im Vergleich zum Schlagen von Teig mit anderen Werkzeugen ist ein deutlich reduziertes Drehmoment erforderlich. Dies gilt insbesondere für das Schlagen schwerer Teige. Als Referenzteig kann Mürbeteig dienen. Das Schlagen eines Referenz-Mürbeteigs mit einem konventionellen Küchenmaschinenaufsatz, wie etwa dem Knethaken des Braun-Gerätes K700 erfordert bis zu 1 Nm Drehmoment. Das erfinderische Rührwerkzeug erlaubt es jedoch einen solchen Teig mit einem Drehmoment von maximal 0,5 Nm zu rühren.

Zum besseren Verständnis der Erfindung sollen auch die nachfolgenden Abbildungen dienen. Soweit hierin und in dem zugehörigen Erläuterungstext technische Merkmale in bestimmter Kombination vorgestellt werden, sind diese auch als einzeln und in anderen Kombinationen offenbart zu betrachten, soweit solche Kombinationen technisch sinnvoll und möglich sind. Bei den Abbildungen zeigen:
Fig. 1 eine perspektivische Gesamtansicht des Rührwerkzeuges,
Fig. 2 eine Seitenansicht des Rührwerkzeuges.

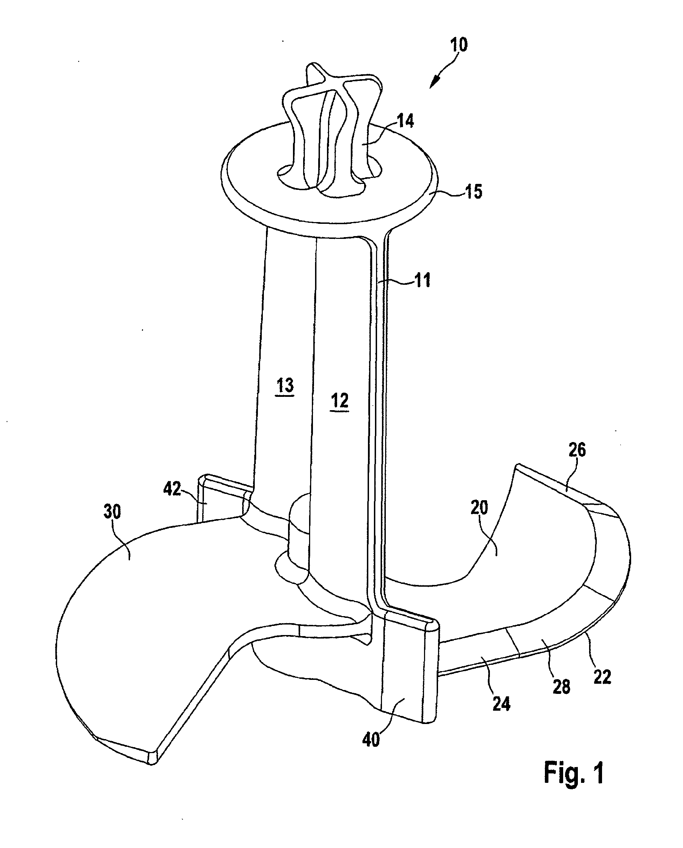

Fig. 1 läßt in perspektivischer Ansicht das Rührwerkzeug 10 und seine Hauptelemente erkennen. Dazu gehört insbesondere das Nabenteil 11. Wie schon in dieser Ansicht erkennbar, ist das Nabenteil in seinem Querschnitt im Wesentlichen wellenförmig gestaltet. Das Nabenteil 11 weist also einen ersten Bogen 12 auf, der in dieser Ansicht konvex auf den Betrachter zu gewölbt ist, und einen sich daran anschließenden zweiten Bogen 13, der in dieser Ansicht konkav ist. Dies erlaubt, mit wenig Material hohe Drehmomente zu übertragen und hat zusätzlich den Effekt, daß auch das Nabenteil einen Beitrag zum Durchmischen von Teig leisten kann. Oben an das Nabenteil 1 schließt sich ein Ring 15 und daran das obere Kupplungsteil 14 an. Mit diesem Kupplungsteil 14 kann das Rührwerkzeug 10 bequem in eine Antriebseinheit eingesetzt werden. Als Antriebseinheit kommt beispielsweise der obere Deckel eines Rührtopfes in Betracht, welcher mit einem Motorteil verbunden ist. Unten erkennt man den ersten Rührarm 20 und gegenüberliegend den zweiten Rührarm 30. Ferner sind um 90° versetzt zur durch die beiden Rührarme definierten Richtung zwei Mischflügel vorgesehen, nämlich ein erster Mischflügel 40 und gegenüberliegend ein zweiter Mischflügel 42. Beim ersten Rührarm 20 erkennt man zum Betrachter hingewandt die Schlagfläche 22. Radial innen liegend ist der Teil 24 der Schlagfläche, während sich der Teil 26 als radial außen liegender Teil anschließt. Der Betrachter blickt auf die Schrägfläche 28, welche sich beim ersten Rührarm 20 an die Schlagfläche 22 anschließt und nach oben gerichtet ist.

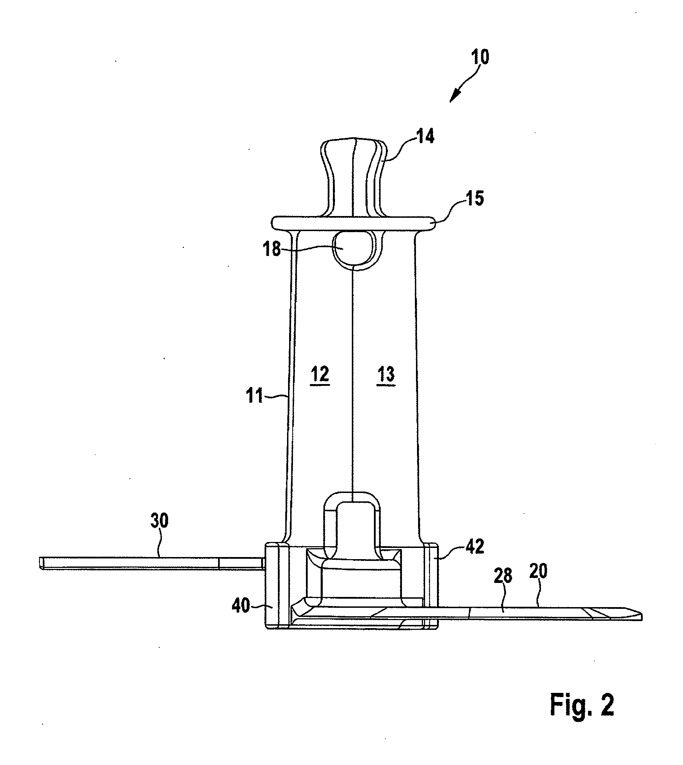

Fig. 2 zeigt eine Seitenansicht des Rührwerkzeugs 20. Als markante Elemente sind wiederum das Nabenteil 11 zu erkennen und der obere Kupplungsteil 14. Ferner erkennt man den ersten Rührarm 20 und den zweiten Rührarm 30 sowie den ersten Mischflügel 40 und den zweiten Mischflügel 42. Die Mischflügel sind entlang der Richtung der Drehachse von gleicher Höhe. Man erkennt an dieser Ansicht ebenfalls besonders gut, daß der erste Rührarm 20 unterhalb des zweiten Rührarms 30 angeordnet ist. (Unterhalb bedeutet hier in Richtung der Rotationsachse gesehen, näher auf die Lagerstelle zu.) Die Anordnung von Rührarmen in verschiedener Höhe hat sich als besonders effektiv für gutes Durchkneten besonders schwerer Teige erwiesen. Dabei ist es vorteilhaft, wenn der untere Rührarm eine nach oben gerichtete Schrägfläche 28 aufweist.

Man erkennt an der Abbildung ferner, daß im Nabenteil 11 eine Aussparung 18 vorgesehen ist. Diese ist so positioniert, daß das Nabenteil trotz der durch die Aussparung erreichten Materialeinsparung ein hohes Drehmoment übertragen kann.

Aus der Beschreibung ist insgesamt deutlich geworden, wie ein Rührwerkzeug hergestellt werden kann, mit dem auch schwere Teige effektiv gerührt werden können und welches sogar mit einem Antrieb von geringem Drehmoment auskommt.

### Bezugszeichenliste:

- 10: Rührwerkzeug
- 11: Nabenteil
- 12: erster Bogen
- 13: zweiter Bogen
- 14: oberes Kupplungsteil
- 15: Ring
- 16: Lagerstelle
- 18: Aussparung
- 20: erster Rührarm
- 22: Schlagfläche
- 24: radial innen liegender Teil
- 26: radial außen liegender Teil
- 27: äußerer Endbereich
- 28: Schrägfläche
- 30: zweiter Rührarm
- 40: erster Mischflügel
- 42: zweiter Mischflügel

## Patentansprüche

1. Rührwerkzeug (10), insbesondere zum Teigrühren, mit einem um eine Antriebsachse in einer Rotationsrichtung rotierbaren Nabenteil (11), von dem sich radial zur Antriebsachse mindestens ein Rührarm (20) erstreckt, **dadurch gekennzeichnet, daß** das Nabenteil (11) mindestens einen achsnahen Bereich und mindestens einen achsfernen Bereich aufweist und der achsferne Bereich aus der Rotationsrichtung gesehen eine konvexe Form hat.

2. Rührwerkzeug (10) nach Anspruch 1, welches zwei, drei, vier oder mehr achsferne Bereiche hat, die aus der Rotationsrichtung gesehen eine konvexe Form haben.

3. Rührwerkzeug (10) nach Anspruch 1 oder 2, dessen Querschnitt in mindestens einer Radialebene S-förmig ist.

4. Rührwerkzeug (10) nach einem der vorhergehenden Ansprüche, bei dem sich in mindestens einem achsfernen Bereich in einem axialen Abschnitt an das Nabenteil (11) ein Mischflügel (40) anschließt.

5. Rührwerkzeug (10) nach einem der vorhergehenden Ansprüche, das zwei radial gegenüberliegende Mischflügel (40, 42) aufweist.

6. Rührwerkzeug (10) nach einem der vorhergehenden Ansprüche, welches ferner Rührarme (20, 30) aufweist.

7. Rührwerkzeug (10) nach Anspruch 6, bei dem die Rührarme (20, 30) in radialer Richtung länger sind als die Mischflügel (40, 42).

8. Rührwerkzeug (10) nach Anspruch 6 oder 7, welches zwei sich radial gegenüberliegende Rührarme (20, 30) aufweist.

9. Rührwerkzeug (10) nach Anspruch 1, bei dem die Rührarme (20, 30) Schlagflächen aufweisen, die jeweils einen Bogen beschreiben.

10. Motorgetriebenes Küchengerät mit einem Rührwerkzeug (10) nach einem der vorhergehenden Ansprüche.

11. Verfahren zum Schlagen von Teig mit einem Rührwerkzeug (10) nach einem der vorhergehenden Ansprüche.
